# EUROPEAN PATENT SPECIFICATION

(11) **EP 4 211 502 B1**
(45) Date of publication and mention of the grant of the patent: **18.11.2026**
(21) Application number: 21772821.1
(22) Date of filing: 06.09.2021
(51) Int. Cl.: G02B 6/04, G02B 6/124

(54) **OPTICAL PROCESSING SYSTEM**
OPTISCHES VERARBEITUNGSSYSTEM
SYSTÈME DE TRAITEMENT OPTIQUE

(30) Priority: 07.09.2020 GB 202014043
(43) Date of publication of application: 19.07.2023
(73) Proprietor: Optalysys Limited, Leeds LS1 4JB (GB)
(72) Inventor: TODD, Robert James, South Yorkshire S71 4NH (GB)
(74) Representative: Wellburn, Daniel
(86) International application number: PCT/GB2021/052289
(87) International publication number: WO 2022/049394

(56) References cited:
- US-A1- 2013 209 112
- US-A1- 2020 073 054

## Description

### Technical Field

Certain embodiments of the invention pertain to optical processing systems.

### Background and prior art known to the Applicant

The following prior art is cited:
- EP1420322;
- WOZ2018167316;
- EP1546838;
- US10289151;
- US10409084;
- WOZ2019207317;
- PCT/EP2020/065740.

US 2020/225401A1 discloses an apparatus for coupling light into and out of an optical waveguide, fiber or photonic chip. A microscale three-dimensional (3D) freeform optical coupler comprises a photonic chip substrate, an optical waveguide, and a 3D freeform optical surface that reflects, refracts, or diffracts light. The waveguide is connected to one end of the optical surface. The other end of the optical surface has an input/output face. The freeform optical coupler can further include features for aligning an optical fiber or second waveguide to the input/output face.

### Summary of the invention

The invention provides an optical processing system according to the appended claims.

Optical processing systems of the kind in question may be particularly advantageous as they allow, in certain embodiments, for greater flexibility of configuration. In particular, the optical processing capacity may be adjusted by expanding the number of modules and/or arrays and/or optical components to improve performance and optionally improve integration into other systems. This system may in certain embodiments facilitate the increase of the yield and scalability of an optical processing system by coupling optical waveguides to a free space Fourier optical stage using an optical fibre bundle, in a modular approach. In certain embodiments, the system is configured so that the fibres can route waveguide outputs to any selected pixel in a 2D array. The particular pixel may be arbitrary and may for example allow a dead pixel to be replaced by another pixel in the array. This therefore allows for greater configurability by allowing the routing to be adapted to the operating requirements which therefore provides a significant yield benefit. This configuration provides, in certain embodiments, a further advantage over using a grating coupler array on silicon by reducing the optical losses and improving the optical output of the pixel / data points.

In a subsidiary aspect, at least one of said integrated optical waveguide arrays comprises an array of couplers which are grating couplers. This configuration is particularly advantageous for coupling integrated optical waveguide arrays with fibre bundles.

In a further subsidiary aspect, at least one of the integrated optical waveguide arrays comprises an array of couplers which are endfire couplers. This configuration is particularly advantageous for coupling integrated optical waveguide arrays with fibre bundles.

In a further subsidiary aspect, both the first and second integrated optical waveguide arrays comprise grating couplers.

In a further subsidiary aspect, both the first and second integrated optical waveguide arrays comprise endfire couplers.

In a further subsidiary aspect, at least one of said integrated optical waveguide arrays comprises an array of couplers which are grating couplers whilst at least one of the optical waveguide arrays comprises an array of couplers which are endfire couplers.

In a further subsidiary aspect, the system comprises a plurality of integrated optical waveguide arrays acting as disparate modules for input into the system. This provides for greater flexibility of configuration for the input side of the optical processing system.

In a further subsidiary aspect, the system comprises a plurality of integrated optical waveguide arrays acting as disparate modules for output from the system. This provides for greater flexibility of configuration for the output side of the optical processing system.

In a further subsidiary aspect, the optical fibre bundles are coupled to the optical Fourier stage by a microlens array. This is particularly advantageous for inserting into free space optics. In certain embodiments, the microlens array may be a 2D array in other embodiments the microlens array may be a 3D array.

In a further subsidiary aspect, the microlens array comprises one or more of the following: square microlens, circular microlens, and/or hexagonal microlens.

In a further subsidiary aspect, the microlens array has one or more of the following: square microlenses on an orthogonal array, circular microlenses on an orthogonal array, circular microlenses on a honeycomb array, and/or hexagonal microlenses on a honeycomb array.

In a further subsidiary aspect, the optical Fourier stage is a free space optical Fourier stage.

In a further subsidiary aspect, the optical Fourier stage comprises a solid glass single module. This configuration is particularly advantageous as it allows for greater modularity of the system.

In a further subsidiary aspect, the system comprises a plurality of 1D integrated optical waveguide arrays which couple into an optical fibre bundle which terminates into either a 2D or 3D array of microlenses. This optional configuration is particularly advantageous as it allows the modular scalability of the system.

In a further subsidiary aspect, each of the integrated optical waveguide arrays, the optical fibre bundles, and the optical Fourier stage are formed as disparate modules.

### Brief Description of the Drawings

Figure 1 shows a schematic plan view of an optical processing system with detailed views 1.1 and 1.2 of the optical Fourier transform assemblies.
Figure 2 shows a schematic plan view of the optical processing system of figure 1 with detailed views of lens arrays 2.1 to 2.4.
Figure 3 shows a schematic plan view of the optical processing system of figure 1 with detailed views of fibre bundle configurations 3.1 and 3.2.
Figure 4 shows a schematic plan view of the optical processing system of figure 1 with detailed views of the fibres in either single mode as in 4.1 or in multi-mode as in figure 4.2.
Figure 5 shows a schematic plan view of the optical processing system of figure 1 with a detailed view of the integrated optical waveguide assembly.
Figure 6 shows a schematic plan view of the optical processing system of figure 1 with a detailed view of an integrated optical waveguide.
Figure 7 shows a schematic plan view of the optical processing system of figure 1 with a detailed view of a grating coupler.
Figure 8 shows a schematic plan view of the optical processing system of figure 1 with a detailed view of fibre couplers.
Figure 9 shows a schematic plan view of the optical processing system of figure 1 with both input and output modules possessing grating couplers.
Figure 10 shows a schematic plan view of an optical processing system with both input and output modules possessing endfire couplers.
Figure 11 shows a schematic plan view of an optical processing system with two input grating modules and a single output grating module.
Figure 12 shows a schematic plan view of an optical processing system with two input grating modules and two output grating modules.
Figure 13 shows a schematic plan view of an optical processing system with two input endfire modules and a single output endfire modules.
Figure 14 shows a schematic plan view of an optical processing system with two input endfire modules and two output endfire modules.

### Detailed Description of the Figures

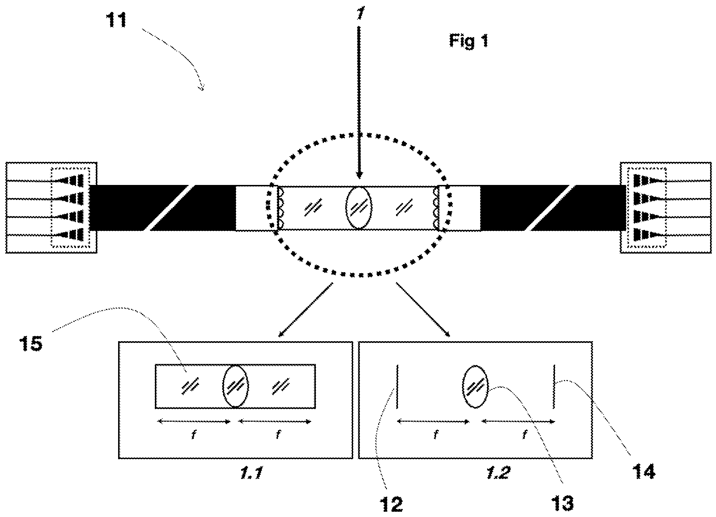

Figure 1 shows an optical processing system, generally referenced 11, which has at its heart an optical Fourier transform assembly 1. Whilst optical Fourier transform assemblies are well known from the patent applications cited in the background section, certain embodiments of the invention envisage free space optics with fluid or a vacuum separating respective input array, output array and lens as shown in detailed view 1.2. The lens and the respective input and output arrays are separated by a distance *f* corresponding to the focal length of the lens.

In a preferred embodiment, a solid glass optical Fourier transform assembly is envisaged as shown in detailed view 1.1. In this configuration, the solid glass optical Fourier transform assembly, forms a module 15 or mono-block 15.

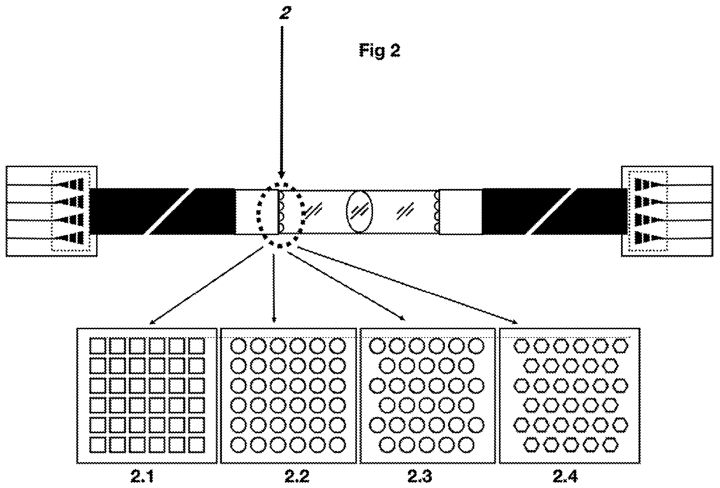

The input into this module will now be described with reference to figure 2. It shows a plurality of optional input microlens arrays 2.1., 2.2., 2.3., and 2.4. Microlens array 2.1 comprises square microlenses on an orthogonal array. Microlens array 2.2 comprises circular microlenses on an orthogonal array. Microlens 2.3 comprises circular microlenses on a honeycomb array. Microlens array 2.4 comprises hexagonal microlenses on a honeycomb array. In certain preferred embodiments, the microlens arrays are formed as a 2-D array. In other embodiments, the microlens arrays may be formed as a 1-D array. In further embodiments, the microlens array may be formed as a 3D array.

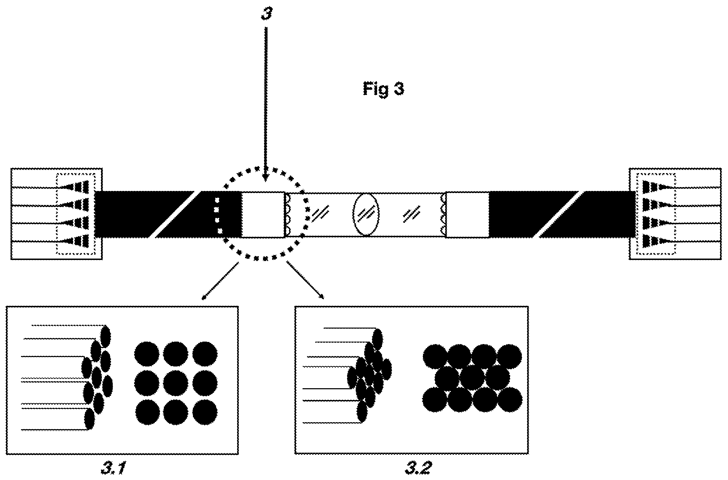

The microlens arrays provide a coupling into the solid glass optical Fourier transform assembly for fibre bundles as provided and illustrated in figure 3. Fibre optic bundle array 3 may be provided in a plurality of configurations as shown in detailed views 3.1. and 3.2. where respectively a square arrangement fibre bundle is shown (view 3.1.) and a hexagonal arrangement fibre bundle (view 3.2.). As can be seen, the hexagonal arrangement fibre bundle allows for a closer configuration of fibres compared to the square arrangement fibre bundle. These fibre bundles may be provided advantageously as modules for extra flexibility of integration into the optical system. In preferred embodiments, the optical lenses are closely contiguous. In further preferred embodiments, the optical lenses are present throughout the array covering both a central region of the array and a perimeter region of the array. In further preferred embodiments, optical fibres are provided on the optical axis of the Fourier system or in close proximity thereto.

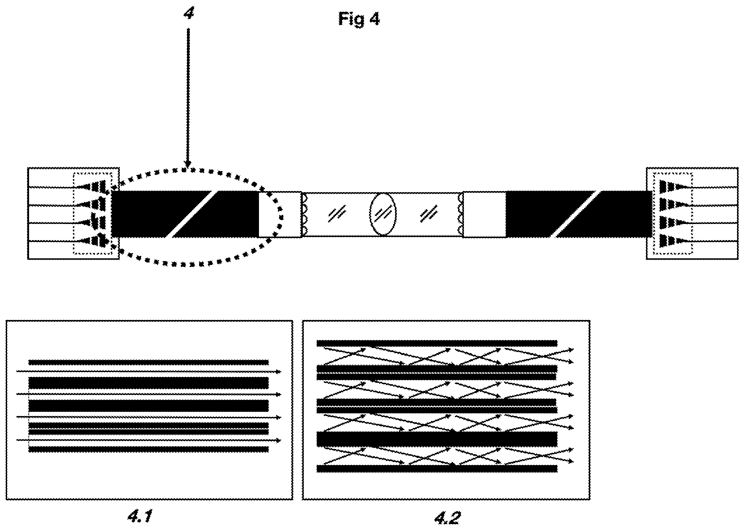

Figure 4 illustrates in further detail the fibre optic bundles. These may comprise individual fibres, which may be single or multi-mode fibres. Detailed view 4.1. illustrates a single mode optical fibre arrangement whilst detailed view 4.2. shows a multi-mode fibre optic arrangement.

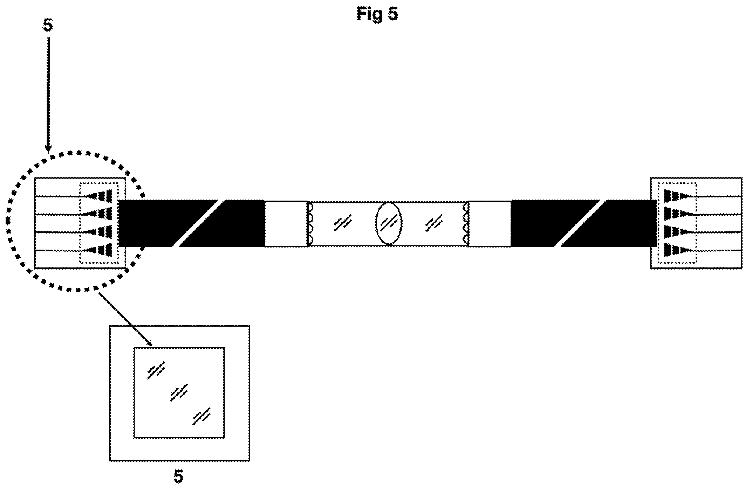

Figure 5 shows a first integrated optical waveguide array, generally referenced 5, according to an embodiment of the claimed invention. The integrated circuit is a module comprising a photonic integrated circuit ('PIC') including, for example, electro-optic crystals such as lithium niobate, silica on silicon, silicon on insulator.

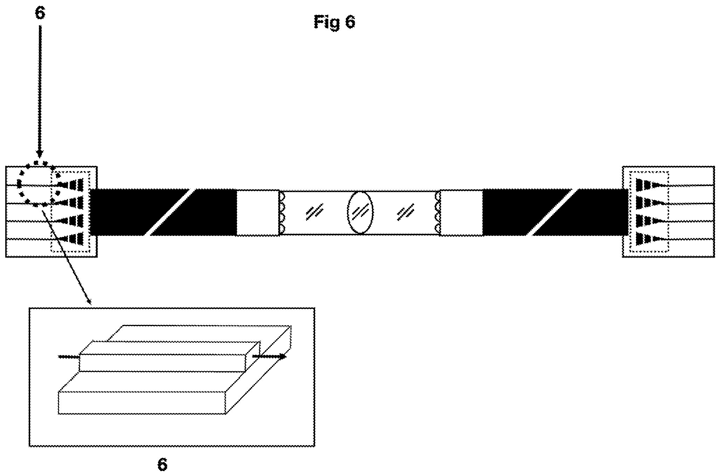

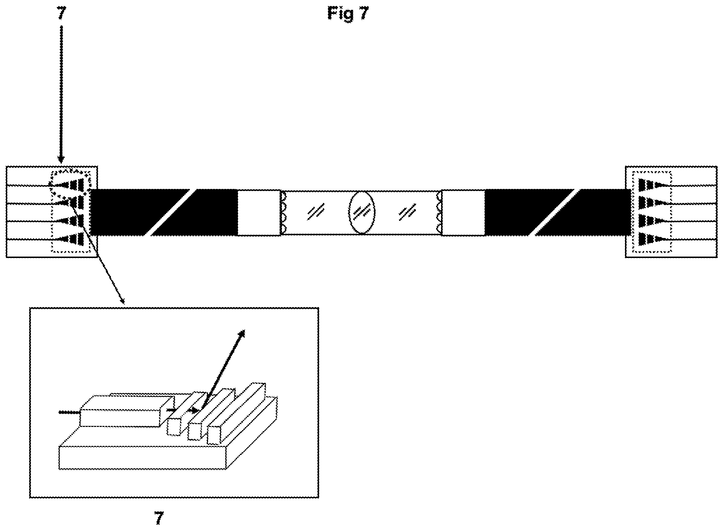

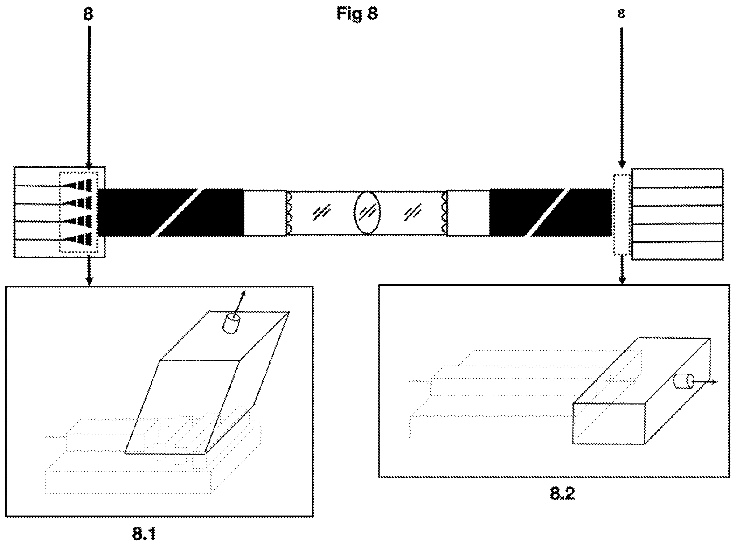

The photonics integrated circuit 'PIC' comprises a multi waveguide as shown in figure 6 and a grating coupler or an endfire coupler as shown in figures 7 and 8 respectively. In use, laser light travels down multiple waveguides on the photonics integrated circuit 'PIC' and then exits each waveguide into a grating coupler or an endfire.

A fibre coupler 8 as shown in figure 8 allows the grating coupler and/or the endfire coupler to couple laser light into the optical fibre bundles which terminate as 1-D or 2-D arrays. The laser light may then travel down the optical fibres of the optical fibre bundles previously described and exit through a 2-D fibre array. The laser light then passes through a microlens array as described in figure 2 which collimates the laser light into the optical Fourier transform assembly of figure 1. The laser light may then travel through another or a second microlens array as shown in figure 2, which focuses the Fourier plane back into another 2-D array, a further fibre bundle is then coupled back into a photonics integrated circuit 'PIC' via couplings of the kind illustrated in figures 7 and 8 respectively.

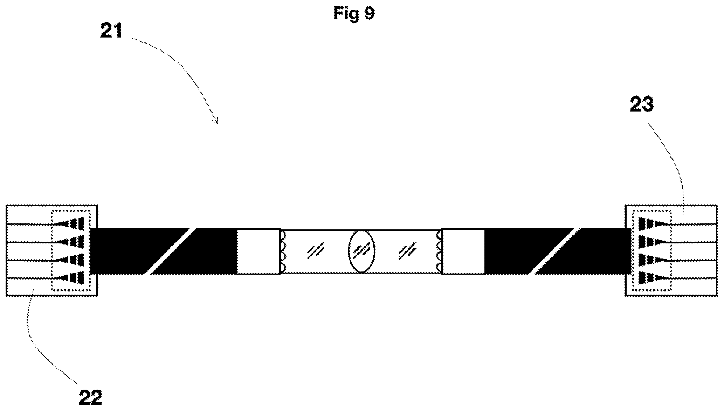

Figure 9 shows an optical processing system 21 where both the first integrated optical waveguide array 22 and the second integrated optical waveguide array 23 are equipped with grating couplers.

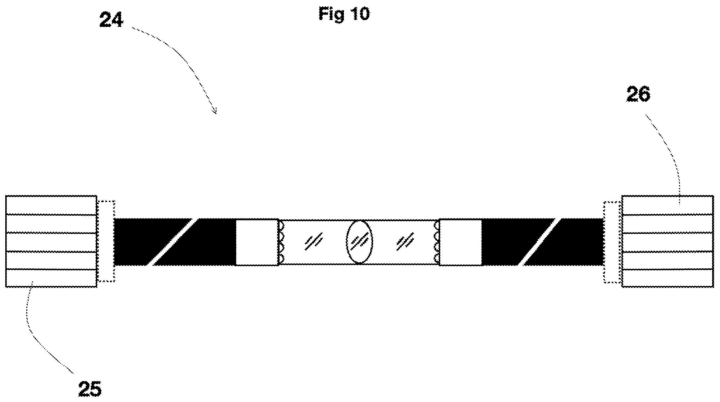

Figure 10 shows an optical processing system 24 where both the first integrated optical waveguide array and the second integrated optical waveguide array are equipped with endfire couplers 25 and 26.

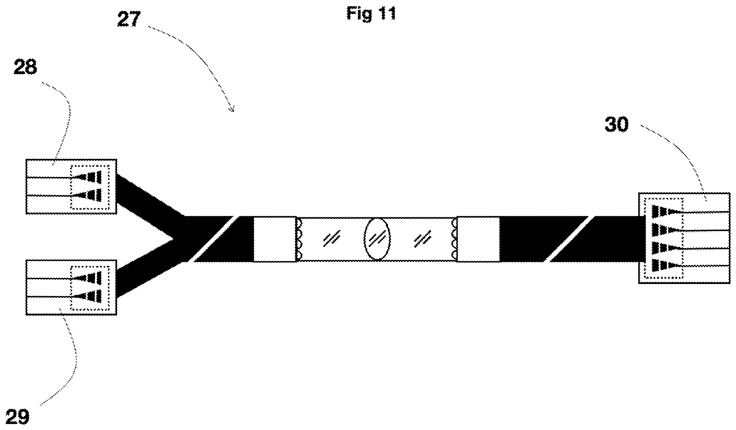

Figure 11 shows an optical processing system 27 where the first integrated optical waveguide array is provided as a pair of modules 28 and 29 of integrated optical waveguide arrays each with grating couplers. A single module 30 is provided as the output of the optical processing system.

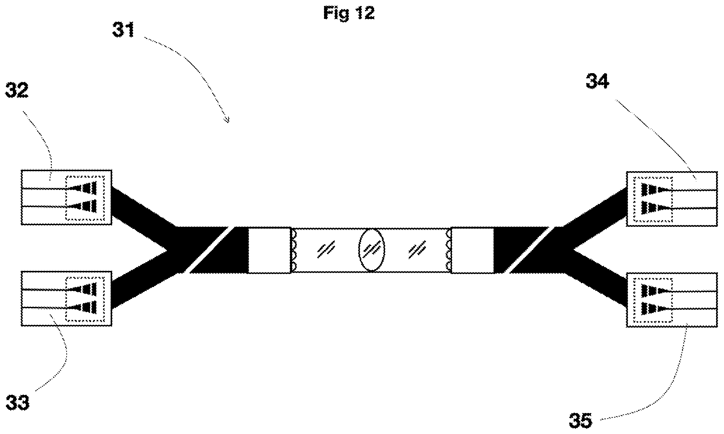

Figure 12 shows an optical processing system 31 with a pair of input modules 32 and 33 and a pair of output modules 34 and 35. The input and output modules each incorporate integrated optical waveguide arrays and grating couplers.

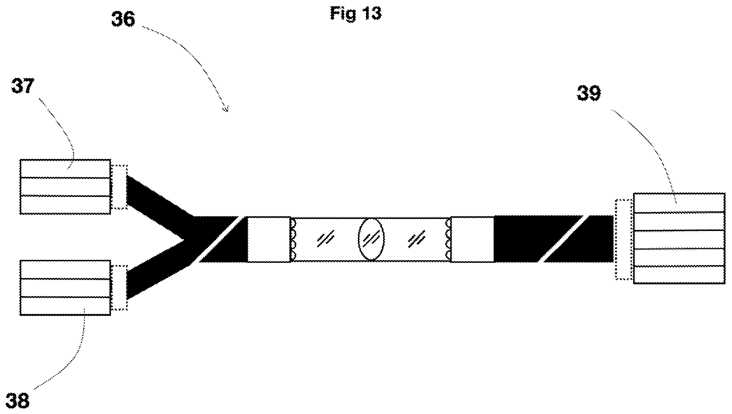

Figure 13 shows an optical processing system 36 with a pair of integrated optical waveguide array modules 37 and 38, which both incorporate endfire couplers. The optical processing system 36 is equipped with a single endfire integrated optical waveguide array as an output module 39.

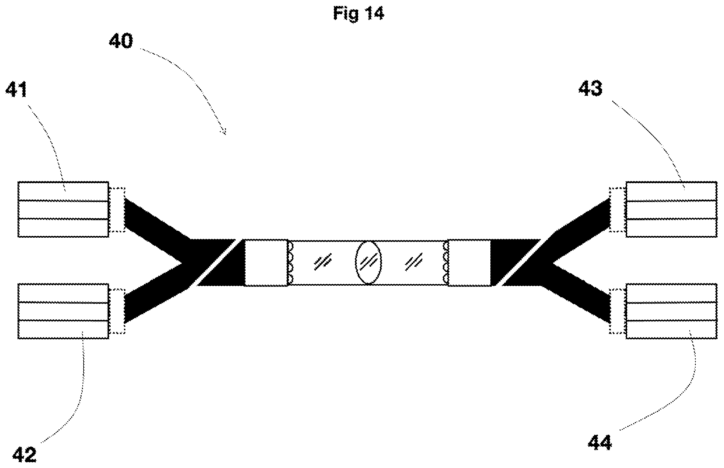

Figure 14 shows a further optical processing system generally referenced 40 where two input modules 41, 42 and two output modules are provided, referenced 43 and 44. Each one of the input and output pairs are equipped with endfire couplers.

Whilst various embodiments have shown a single input module and a single output module as well as the possibility of having several modules as input or outputs, the invention also envisages providing a greater number than two modules for either the input or output. Furthermore, the terms input and output may be interchanged in any of the preceding embodiments. In further embodiments, integrated optical waveguide arrays may for example each be 1-D arrays in order to be able to couple in combination into fibre bundle arrays leading to a lens array which is of a 2-D configuration. This provides optical processing systems with a greater flexibility in order to accommodate an increasing number of modules in order to flexibly increase the capacity of a particular optical processing system. Whilst illustrated modules are each optical systems, it is envisaged that these may be integrated into other modules of the electro-optic kind in order to provide integration of the optical processing system into other processing modules.

## Claims

1. An optical processing system (11, 21, 24, 27, 31, 36, 40) comprising:
a first photonics integrated circuit, PIC, module (5, 28, 29, 32, 33, 37, 38, 41, 42) comprising a first integrated optical waveguide array (6) and a first coupler (7);
a first bundle (4; 4.1; 4.2) of optical fibres; said optical fibres being coupled to said first integrated optical waveguide array of said first photonics integrated circuit, PIC,
module by said first coupler; said optical fibres being further coupled to an optical Fourier stage (1; 1.1; 1.2);
a second bundle of optical fibres being coupled to said optical Fourier stage;
a second photonics integrated circuit, PIC, module (30, 34, 35, 39, 43, 44) comprising a second integrated optical waveguide array and a second coupler for coupling said second bundle of optical fibres to said second integrated optical waveguide array of said second photonics integrated circuit, PIC, module.

2. An optical processing system according to claim 1, wherein at least one of said integrated optical waveguide arrays comprises an array of couplers which are grating couplers.

3. An optical processing system according to either claim 1 or claim 2, wherein at least one of said integrated optical waveguide arrays comprises an array of couplers which are endfire couplers.

4. An optical processing system according to claim 2, wherein both said first and second integrated optical waveguide arrays comprise grating couplers.

5. An optical processing system according to claim 3, wherein both said first and second integrated optical waveguide arrays comprise endfire couplers.

6. An optical processing system according to any one of claims 1 to 3, wherein at least one of said integrated optical waveguide arrays comprises an array of couplers which are grating couplers whilst at least one of said optical waveguide arrays comprises an array of couplers which are endfire couplers.

7. An optical processing system according to any one of claims 1 to 3 and 6, wherein said system comprises a plurality of integrated optical waveguide arrays acting as disparate modules for input into the system.

8. An optical processing system according to any one of claims 1 to 3, 6 and 7, wherein said system comprises a plurality of integrated optical waveguide arrays acting as disparate modules for output from said system.

9. An optical processing system according to any one of the preceding claims, wherein said optical fibre bundles are coupled to said optical Fourier stage by a microlens array (2).

10. An optical processing system according to claim 9, wherein said microlens array comprises one or more of the following: square microlens (2.1), circular microlens (2.2; 2.3), and/or hexagonal microlens (2.4).

11. An optical processing system according to claim 10, wherein said microlens array has one or more of the following: square microlenses on an orthogonal array, circular microlenses on an orthogonal array, circular microlenses on a honeycomb array, and/or hexagonal microlenses on a honeycomb array.

12. An optical processing system according to any of the preceding claims, wherein said optical Fourier stage is a free space optical Fourier stage.

13. An optical processing system according to any of the preceding claims, wherein said optical Fourier stage comprises a solid glass single module.

14. An optical processing system according to any of the preceding claims, wherein said integrated optical waveguide arrays comprise a plurality of 1D integrated optical waveguide arrays which couple into optical fibre bundle arrays which are then coupled to a 2D lens array.

15. An optical processing system according to any of the preceding claims, wherein each of said integrated optical waveguide arrays, said optical fibre bundles, and said optical Fourier stage are formed as disparate modules.

## Patentansprüche

1. Optisches Verarbeitungssystem (11, 21, 24, 27, 31, 36, 40), umfassend:
ein erstes integriertes Photonikschaltungsmodul, PIC-Modul, (5, 28, 29, 32, 33, 37, 38, 41, 42), umfassend eine erste integrierte optische Wellenleiteranordnung (6) und einen ersten Koppler (7);
ein erstes Bündel (4; 4.1; 4.2) von optischen Fasern; wobei die optischen Fasern durch den ersten Koppler an die erste integrierte optische Wellenleiteranordnung des ersten integrierten Photonikschaltungsmoduls, PIC, gekoppelt sind; wobei die optischen Fasern ferner an eine optische Fourier-Stufe (1; 1.1; 1.2) gekoppelt sind;
ein zweites Bündel von optischen Fasern, die an die optische Fourier-Stufe gekoppelt sind;
ein zweites integriertes Photonikschaltungsmodul, PIC-Modul, (30, 34, 35, 39, 43, 44), umfassend eine zweite integrierte optische Wellenleiteranordnung und einen zweiten Koppler zum Koppeln des zweiten Bündels von optischen Fasern an die zweite integrierte optische Wellenleiteranordnung des zweiten integrierten Photonikschaltungsmoduls, PIC.

2. Optisches Verarbeitungssystem gemäß Anspruch 1, wobei wenigstens eine der integrierten optischen Wellenleiteranordnungen eine Anordnung von Kopplern umfasst, bei denen es sich um Gitterkoppler handelt.

3. Optisches Verarbeitungssystem gemäß Anspruch 1 oder Anspruch 2, wobei wenigstens eine der integrierten optischen Wellenleiteranordnungen eine Anordnung von Kopplern umfasst, bei denen es sich um Endfire-Koppler handelt.

4. Optisches Verarbeitungssystem gemäß Anspruch 2, wobei sowohl die erste als auch die zweite integrierte optische Wellenleiteranordnung Gitterkoppler umfasst.

5. Optisches Verarbeitungssystem gemäß Anspruch 3, wobei sowohl die erste als auch die zweite integrierte optische Wellenleiteranordnung Endfire-Koppler umfasst.

6. Optisches Verarbeitungssystem gemäß einem der Ansprüche 1 bis 3, wobei wenigstens eine der integrierten optischen Wellenleiteranordnungen eine Anordnung von Kopplern umfasst, bei denen es sich um Gitterkoppler handelt, während wenigstens eine der optischen Wellenleiteranordnungen eine Anordnung von Kopplern umfasst, bei denen es sich um Endfire-Koppler handelt.

7. Optisches Verarbeitungssystem gemäß einem der Ansprüche 1 bis 3 und 6, wobei das System mehrere integrierte optische Wellenleiteranordnungen umfasst, die als disparate Module für Eingaben in das System fungieren.

8. Optisches Verarbeitungssystem gemäß einem der Ansprüche 1 bis 3, 6 und 7, wobei das System mehrere integrierte optische Wellenleiteranordnungen umfasst, die als disparate Module für Ausgaben aus dem System fungieren.

9. Optisches Verarbeitungssystem gemäß einem der vorstehenden Ansprüche, wobei die optischen Faserbündel durch eine Mikrolinsenanordnung (2) an die optische Fourier-Stufe gekoppelt sind.

10. Optisches Verarbeitungssystem gemäß Anspruch 9, wobei die Mikrolinsenanordnung eines oder mehrere hiervon umfassen: quadratische Mikrolinse (2,1), kreisförmige Mikrolinse (2.2; 2.3) und/oder sechseckige Mikrolinse (2.4).

11. Optisches Verarbeitungssystem gemäß Anspruch 10, wobei die Mikrolinsenanordnung eines oder mehrere hiervon aufweist: quadratische Mikrolinsen in einer orthogonalen Anordnung, kreisförmige Mikrolinsen in einer orthogonalen Anordnung, kreisförmige Mikrolinsen in einer Wabenanordnung und/oder sechseckige Mikrolinsen in einer Wabenanordnung.

12. Optisches Verarbeitungssystem gemäß einem der vorstehenden Ansprüche, wobei die optische Fourier-Stufe eine optische Freiraum-Fourier-Stufe ist.

13. Optisches Verarbeitungssystem gemäß einem der vorstehenden Ansprüche, wobei die optische Fourier-Stufe ein Einzelmodul aus massivem Glas umfasst.

14. Optisches Verarbeitungssystem gemäß einem der vorstehenden Ansprüche, wobei die integrierten optischen Wellenleiteranordnungen mehrere integrierte optische 1D-Wellenleiteranordnungen umfassen, die zu optischen Faserbündelanordnungen gekoppelt sind, die dann an eine 2D-Linsenanordnung gekoppelt werden.

15. Optisches Verarbeitungssystem gemäß einem der vorstehenden Ansprüche, wobei die integrierten optischen Wellenleiteranordnungen, die optischen Faserbündel und die optische Fourier-Stufe jeweils als disparate Module ausgebildet sind.

## Revendications

1. Système de traitement optique (11, 21, 24, 27, 31, 36, 40) comprenant :
un premier module de type circuit intégré photonique, PIC, (5, 28, 29, 32, 33, 37, 38, 41, 42) comprenant un premier réseau de guides d'ondes optiques intégré (6) et un premier coupleur (7) ;
un premier faisceau (4 ; 4.1 ; 4.2) de fibres optiques ;
lesdites fibres optiques étant couplées audit premier réseau de guides d'ondes optiques intégré dudit premier module de circuit intégré photonique, PIC, par ledit premier coupleur ; lesdites fibres optiques étant en outre couplées à un étage de Fourier optique (1 ; 1.1 ; 1.2) ;
un deuxième faisceau de fibres optiques étant couplé audit étage optique de Fourier ;
un deuxième module de type circuit intégré photonique, PIC, (30, 34, 35, 39, 43, 44) comprenant un deuxième réseau de guides d'ondes optiques intégré et un deuxième coupleur pour coupler ledit deuxième faisceau de fibres optiques audit deuxième réseau de guides d'ondes optiques intégré dudit deuxième module de circuit intégré photonique, PIC.

2. Système de traitement optique selon la revendication 1, dans lequel au moins l'un desdits réseaux intégrés de guides d'ondes optiques comprend un réseau de coupleurs qui sont des coupleurs à réseau de diffraction.

3. Système de traitement optique selon soit la revendication 1, soit la revendication 2, dans lequel au moins l'un desdits réseaux intégrés de guides d'ondes optiques comprend un réseau de coupleurs qui sont des coupleurs à couplage par l'extrémité.

4. Système de traitement optique selon la revendication 2, dans lequel lesdits premier et deuxième réseaux de guides d'ondes optiques intégrés comprennent des coupleurs à réseau de diffraction.

5. Système de traitement optique selon la revendication 3, dans lequel lesdits premier et deuxième réseaux de guides d'ondes optiques intégrés comprennent des coupleurs à couplage par l'extrémité.

6. Système de traitement optique selon l'une quelconque des revendications 1 à 3, dans lequel au moins un desdits réseaux intégrés de guides d'ondes optiques comprend un réseau de coupleurs qui sont des coupleurs à réseau de diffraction tandis qu'au moins un desdits réseaux de guides d'ondes optiques comprend un réseau de coupleurs qui sont des coupleurs à couplage par l'extrémité.

7. Système de traitement optique selon l'une quelconque des revendications 1 à 3 et 6, dans lequel ledit système comprend une pluralité de réseaux de guides d'ondes optiques intégrés agissant comme des modules disparates pour l'entrée dans le système.

8. Système de traitement optique selon l'une quelconque des revendications 1 à 3, 6 et 7, dans lequel ledit système comprend une pluralité de réseaux de guides d'ondes optiques intégrés agissant comme des modules disparates pour la sortie dudit système.

9. Système de traitement optique selon l'une quelconque des revendications précédentes, dans lequel lesdits faisceaux de fibres optiques sont couplés audit étage de Fourier optique par un réseau de microlentilles (2).

10. Système de traitement optique selon la revendication 9, dans lequel ledit réseau de microlentilles comprend une ou plusieurs des lentilles suivantes : une microlentille carrée (2.1), une microlentille circulaire (2.2 ; 2.3) et/ou une microlentille hexagonale (2.4).

11. Système de traitement optique selon la revendication 10, dans lequel ledit réseau de microlentilles comporte une ou plusieurs des lentilles suivantes : des microlentilles carrées sur un réseau orthogonal, des microlentilles circulaires sur un réseau orthogonal, des microlentilles circulaires sur un réseau en nid d'abeille, et/ou des microlentilles hexagonales sur un réseau en nid d'abeille.

12. Système de traitement optique selon l'une quelconque des revendications précédentes, dans lequel ledit étage de Fourier optique est un étage de Fourier optique en espace libre.

13. Système de traitement optique selon l'une quelconque des revendications précédentes, dans lequel ledit étage de Fourier optique comprend un module unique en verre plein.

14. Système de traitement optique selon l'une quelconque des revendications précédentes, dans lequel lesdits réseaux de guides d'ondes optiques intégrés comprennent une pluralité de réseaux de guides d'ondes optiques intégrés 1D qui se couplent en réseaux de faisceaux de fibres optiques qui sont ensuite couplés à un réseau de lentilles 2D.

15. Système de traitement optique selon l'une quelconque des revendications précédentes, dans lequel chacun desdits réseaux intégrés de guides d'ondes optiques, desdits faisceaux de fibres optiques et dudit étage de Fourier optique est formé sous la forme de modules disparates.
